(19) Europäisches Patentamt
European Patent Office
Office européen des brevets

(11) Publication number: **0 048 692 B1**

(12) # EUROPEAN PATENT SPECIFICATION

(45) Date of publication of the patent specification: **18.04.84**

(21) Application number: **81810379.8**

(22) Date of filing: **14.09.81**

(51) Int. Cl.³: **C 09 B 41/00** // C09B29/30, C09B29/095, C09B35/16, C09B35/12, C09B35/029, C09B35/025, C09B33/02, C09B33/10

(54) **Azo coupling process.**

(30) Priority: **19.09.80 GB 8030426**

(43) Date of publication of application: **31.03.82 Bulletin 82/13**

(45) Publication of the grant of the patent: **18.04.84 Bulletin 84/16**

(84) Designated Contracting States: **CH DE FR GB LI**

(56) References cited:
**DE - A - 2 901 861**
**FR - A - 2 119 078**
**GB - A - 1 107 597**
**GB - A - 1 117 774**
**GB - A - 2 034 738**

(73) Proprietor: **CIBA-GEIGY AG, Postfach, CH-4002 Basel (CH)**

(72) Inventor: **Clark, Malcolm Colin, Dr., 61, Queensway Heald Green, Cheadle Cheshire, SK8 3FT (GB)**
Inventor: **Murphy, Gerald Anthony, Dr., Rose Cottage Horsforth Lane, Greenfield Oldham OL3 7HL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



ACTORUM AG

# Azo Coupling Process

The present invention relates to a process of coupling an aromatic diazonium compound, under acidic conditions, on to an aminonaphthol sulphonic acid or aminonaphthalene sulphonic acid, to form the corresponding azo compound.

Processes are known for coupling aromatic diazonium compounds, under acidic conditions, on to aminonaphthol sulphonic acids, to form monoazo compounds, in which the coupling is effected in the ortho and/or para positions relative to the amino group in the naphthalene residue. The monoazo compounds so produced typically have the formula:

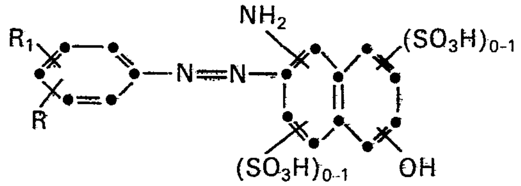

I

Such compounds are of considerable commercial importance either as dyestuffs per se or as intermediates therefor.

However, such known coupling processes often proceed only slowly over several hours and/or incompletely, with some couplings occurring ortho to the hydroxyl group, with consequent loss of yield.

One of the areas in which compounds of formula I are frequently used as intermediates is in the production of diazo compounds of the formula:

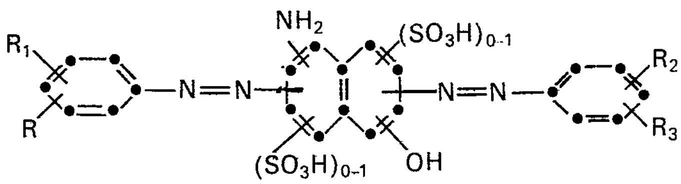

II

wherein the second azo function is introduced in a position ortho and/or para to the hydroxyl group in the naphthalene residue, by coupling under alkaline conditions. Clearly, if when coupling under acidic conditions to form a compound having the formula I a significant amount of coupling also occurs in a position ortho and or para to the hydroxyl group to form monoazo compounds having the formula

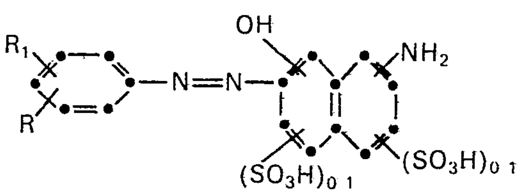

III

then subsequent attempts to form the bisazo compound of formula II will be unsuccessful since the coupling position ortho and/or para to the hydroxyl group will be blocked. Since the introduction of azo groups into a dyestuff molecule has a profound bathochromic effect, coupling ortho and/or para to the hydroxyl group in those cases where coupling ortho and/or para to the amino group is desired, will have a deleterious effect on yield and/or shade of the dye so produced.

Surprisingly, we have now found that the coupling of aromatic diazonium or tetrazonium compounds on to the amino naphthol sulphonic acids or aminonaphthalene sulphonic acids under acidic conditions in order to produce a dyestuff in which the diazo moiety is in ortho and/or para position to the amino group, is greatly facilitated by carrying out the coupling process in the presence of a specified dicarboxylic acid and at a pH value in a range below 5.

Accordingly, the present invention provides a process for the production of a compound having the formula

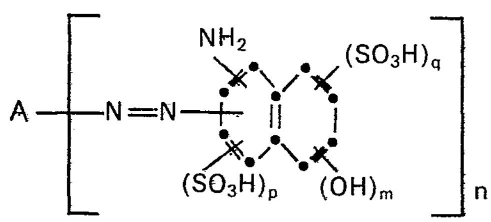

IV

wherein A is an aromatic residue, m is 0 or 1, p is 0, 1 or 2, q is 0, 1 or 2, and n is 1, 2 or 3, provided that p + q is at least 1, and wherein the group(s) A–N = N– are situated predominately in the positions ortho and/or para to the amino group in the naphthalene residue, comprising coupling a diazonium or tetrazonium compound having the formula

$$A—(N{=\!=}N^{\oplus}X^{\ominus})_{n_1} \qquad V$$

wherein A has its previous significance, $n_1$ is 1 or 2 and $X^{\ominus}$ is an anion. preferably a chloride ion, with an aminonaphthalene sulphonic acid having the formula

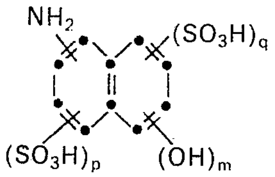

VI

wherein m, p and q have their previous significance, at a pH value in the range below 5,0 and in the presence of a dicarboxylic acid having a first dissociation constant which is in excess of 30 × $10^{-5}$, or salt of such acid; and optionally further coupling the product so obtained with a diazo compound of formula V, and optionally further coupling with a compound of formula VI or a phenolic or amino end coupling component usually employed in dyestuffs syntheses.

Examples of residues A include phenyl and diphenyl residues each optionally substituted with one or more substituents usual in dyestuff chemistry e.g. alkyl or alkoxy groups each having 1 to 4 carbon atoms, halogen atoms, sulphonic acid groups, nitro groups, hydroxy groups, aryl groups, cycloalkyl groups, aralkyl groups, aryloxy groups, cyano groups, carboxylic acid groups, substituted amino groups, carboxylic ester- or amide groups or arylamino groups. Specific examples of arylamines from which the diazonium- or tetrazonium compound may be derived include sulphanilic acid, p-nitroaniline, 2,5-dichloro-aniline and o-tolidine.

Aminonaphthalene sulphonic acid coupling components which may be used in the process of the invention include

(a) Aminonaphthol sulphonic acids e.g.
1-amino-8-naphthol-6-sulphonic acid
1-amino-8- naphthol-3,6-disulphonic acid (H acid)
2-amino-8-naphthol-3,6-disulphonic acid (2R acid)
2-amino-8-naphthol-6-sulphonic acid (Gamma acid)
1-amino-8-naphthol-2,4-disulphonic acid (2S acid)
2-amino-5-naphthol-7-sulphonic acid (Isogamma acid)
1-amino-5-naphthol-7-sulphonic acid (M acid)
1-amino-8-naphthol-4-sulphonic acid (S acid)
1-amino-8-naphthol-4,6-disulphonic acid (K acid).

(b) Naphthylamine sulphonic acids e.g.
2-naphthylamine-6,8-disulphonic acid (Amino G acid)
2-naphthylamine-3,6-disulphonic acid (Amino R acid)
2-naphthylamine-8-sulphonic acid (Badische acid)
2-naphthylamine-6-sulphonic acid (Bronner's acid)
1-naphthylamine-5,6- or 7-sulphonic acid (Cleve's acid)
2-naphthylamine-5-sulphonic acid (Dahl's acid)
1-naphthylamine-4,6-disulphonic acid (Dahl's acid II)
1-naphthylamine-4,7-disulphonic acid (Dahl's acid III)
1-naphthylamine-3,6-disulphonic acid (Freund's acid)
1-naphthylamine-3,6,8-trisulphonic acid (Koch's acid)
1-naphthylamine-5-sulphonic acid (Laurent's acid)
1-naphthylamine-4-sulphonic acid (Naphthionic acid)
1-naphthylamine-8-sulphonic acid (Peri acid).

Dicarboxylic acids which are suitable for use in the process of the invention include oxalic acid, malonic acid, maleic acid, fumaric acid and phthalic acid; and salts, e.g. alkali metal salts of these acids.

The process of the invention is conveniently effected by first preparing the diazonium or tetrazonium compound in conventional manner e.g. by reacting an ice-cooled mixture of an amine $A(NH_2)_n$, hydrochloric acid and water, with sodium nitrite. The solution of the compound of formula V so obtainted may then be reacted with the aminonaphthalene sulphonic acid of formula VI, at a pH value below 5,0, in the presence of the dicarboxylic acid (or salt). Tris-azo dyestuffs may be produced by further coupling under alkaline conditions with a diazo compound of formula V, followed by still further coupling with a coupling component of formula VI or a phenolic or amino end coupling component usually employed in dyestuffs syntheses. Dyestuffs of formula IV so produced may be isolated in the usual manner by salting out.

The following Examples further illustrate the present invention. Parts and percentages shown therein are by weight unless otherwise stated.

**Example 1**

28.2 parts of o-tolidine in 265 parts of water and 33 parts of hydrochloric acid (28%) are tetrazotised at 0 °C by the addition of 44 parts of sodium nitrite (34,5%). A solution is then added over 2 hours at <5 °C of 42,5 parts of 1-amino-8-naphthol-3,6-disulphonic acid (H acid) in 265 parts of water, dissolved at pH 6,5–7,0 by the addition of 7,5 parts of sodium hydroxide (47%). 20 parts of sodium hydrogen phthalate are added and after 1 hour, the coupling is nearing completion. The coupling is completed by raising to pH 4. The dyestuff is isolated in the conventional manner by salting out.

If desired, a tris azo dyestuff may be formed by further coupling under alkaline conditions with a diazo component, followed by coupling with a phenolic or amino coupling component.

**Example 2**

The procedure for Example 1 was followed except that sodium hydrogen phthalate was replaced by 90 parts of oxalic acid in 100 parts of water, adjusted to pH 3 with 86 parts of sodium hydroxide (47%). Coupling of the o-tolidine tetrazo and H acid proceeded rapidly as in Example 1. After 1 hour the pH was raised to pH 4 with sodium acetate and the coupling was complete within 1 hour. In the above Example the oxalic acid can be replaced by maleic, fumaric or malonic acids with similar effects.

If desired, a tris azo dyestuff may be produced in the manner described in Example 1.

**Example 3**

20 parts of p-nitraniline are stirred with 55 parts of water, made strongly acid with 34 parts of hydrochloric acid (31,5%) and diazotised with 23,7 parts of sodium nitrite (34,4%). 43.2 parts of 1-amino-8-naphthol-3,6-disulphonic acid (H acid) in 140 parts of water are dissolved at pH 6,5–7,0 by the addition of 7,5 parts of sodium hydroxide (47%). The solution is added over fifteen minutes to the diazo, followed by 50 parts of sodium hydrogen phthalate. Coupling is complete within 15 minutes. Without the addition of sodium hydrogen phthalate, the first coupling time can take a number of hours.

In the above Example p-nitroaniline can be replaced by a number of amines such as sulphanilic acid and 2,5-dichloroaniline.

If desired, the monoazo compound may be further coupled at pH 9 with a diazo component and the dyestuff isolated by salting out.

**Example 4**

28.2 parts of o-tolidine were tetrazotised as in Example 1. 31.7 parts of 2-amino-5-naphthol-7-sulphonic acid (J acid) in 265 parts of water were dissolved at pH 6.5–7.0 by the addition of 7.5 parts of sodium hydroxide (47%) and added over 2 hours <5 °C to the tetrazo. 20 parts of sodium hydrogen phthalate were added and after 1 1/2 hours, coupling was complete. 2-Amino-5-naphthol-7-sulphonic acid can be replaced by any suitable amino-naphthol sulphonic acid. If desired, a trisazo dyestuff can be formed and isolated as in Example 1.

**Example 5**

28.2 parts of o-tolidine were tetrazotised as in Example 1. 29.7 parts of 1-naphthylamine-6-sulphonic acid and 265 parts of water were adjusted to pH 6–7 with sodium hydroxide and added over 2 hours to the tetrazo at <5 °C. 20 parts of sodium hydrogen phthalate were added and coupling was complete in less than 1/2 hour at pH <3.

In the above Example 1-naphthylamine-6-sulphonic acid can be replaced by any suitable naphthylamine sulphonic acid. If desired, the disazo dyestuff can be prepared by further reaction at pH 9 with a phenolic or amino end component, followed by salting out and isolation.

**Example 6**

28.2 parts of o-tolidine were tetrazotised as in Example 1. A solution is then added over 2 hours at <5 °C of 42.5 parts of 1-amino-8-naphthol-3,6-disulphonic acid (H acid) in 265 parts of water, dissolved at pH 6.5–7.0 by the addition of 7.5 parts of sodium hydroxide (47%). 80 parts of disodium phthalate solution (20%) are added and after one hour the coupling is completed by raising to pH 4. The dyestuff is isolated in the conventional manner by salting out.

If desired, a tris azo dyestuff may be formed by further coupling under alkaline conditions with a diazo component, followed by coupling with a phenolic or amino coupling component.

**Claims**

1. A process for the production of a compound having the formula

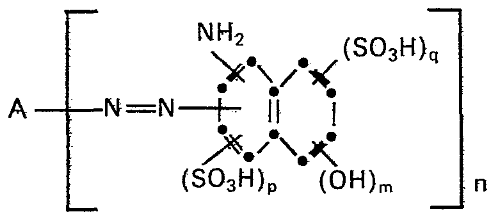

IV

wherein A is an aromatic residue, m is 0 or 1, p is 0, 1 or 2, q is 0, 1 or 2, provided that p + q is at least 1, and n is 1, 2 or 3, and wherein the group or groups A–N = N– are situated predominately in the positions ortho- and/or para to the amino group in the naphthalene residue, comprising coupling a diazonium or tetrazonium compound having the formula

$$A-(N=N^{\oplus}\ X^{\ominus})_{n_1} \qquad V$$

wherein A has its previous significance, $n_1$ is 1 or 2 and $X^{\ominus}$ is an anion, with an aminonaphthalene sulphonic acid having the formula

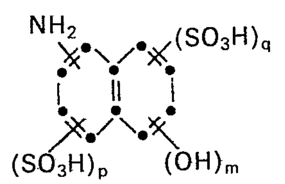

VI

wherein m, p and q have their previous significance, at a pH value in the range below 5.0, and in the presence of a dicarboxylic acid having a first dissociation constant which is in excess of 30 × $10^{-5}$, or a salt of such acid; and optionally further coupling the product so obtained with a diazo compound of formula V and optionally further coupling with a compound of formula VI or a phenolic or amino end coupling component usually employed in dyestuffs syntheses.

2. A process according to claim 1, wherein A is a phenyl or diphenyl residue each optionally substituted with one or more alkyl or alkoxy groups each having 1 to 4 carbon atoms, halogen atoms, sulphonic acid groups, nitro groups, hydroxy groups, aryl groups, cycloalkyl groups, aralkyl groups, aryloxy groups, cyano groups, carboxylic acid groups, substituted amino groups, carboxylic ester- or amide groups, or arylamino groups.

3. A process according to claim 2, wherein the residue A is derived from sulphanilic acid, p-nitroaniline, 2,5-dichloroaniline or o-tolidine.

4. A process according to any of the preceding claims, wherein the compound of formula VI is:
1-amino-8-naphthol-6-sulphonic acid
1-amino-8-naphthol-3,6-disulphonic acid (H acid)
2-amino-8-naphthol-3,6-disulphonic acid (2R acid)
2-amino-8-naphthol-6-sulphonic acid (Gamma acid)
1-amino-8-naphthol-2,4-disulphonic acid (2S acid)
2-amino-5-naphthol-7-sulphonic acid (Iso-gamma acid)
1-amino-5-naphthol-7-sulphonic acid (M acid)
1-amino-8-naphthol-4-sulphonic acid (S acid)
1-amino-8-naphthol-4,6-disulphonic acid (K acid).

5. A process according to any of claims 1 to 3 wherein the compound of formula VI is:
2-naphthylamine-6,8-disulphonic acid (Amino G acid)
2-naphthylamine-3,6-disulphonic acid (Amino R acid)
2-naphthylamine-8-sulphonic acid (Badische acid)
2-naphthylamine-6-sulphonic acid (Bronner's acid)
1-naphthylamine-5,6- or 7-sulphonic acid (Cleve's acid)
2-naphthylamine-5-sulphonic acid (Dahl's acid)
1-naphthylamine-4,6-disulphonic acid (Dahl's acid II)
1-naphthylamine-4,7-disulphonic acid (Dahl's acid III)
1-naphthylamine-3,6-disulphonic acid (Freund's acid)
1-naphthylamine-3,6,8-trisulphonic acid (Koch's acid)
1-naphthylamine-5-sulphonic acid (Laurent's acid)
1-naphthylamine-4-sulphonic acid (Naphthionic acid)
1-naphthylamine-8-sulphonic acid (Peri acid).

6. A process according to any of the preceding claims wherein the dicarboxylic acid or salt is oxalic acid, malonic acid, maleic acid, fumaric acid or phthalic acid, or salts of these acids.

**Patentansprüche**

1. Ein Verfahren zur Herstellung einer Verbindung der Formel

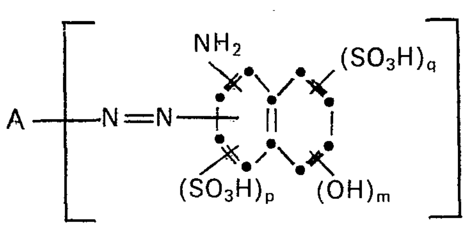

IV

worin A ein aromatischer Rest, m = 0 oder 1, p = 0, 1 oder 2, q = 0, 1 oder 2, mit der Bedingung, dass p+q mindestens = 1 ist, und n = 1, 2 oder 3 ist, und worin die Gruppe oder die Gruppen A–N=N– vorwiegend in den Positionen ortho und/oder para zu der Aminogruppe im Naphthalinrest gebunden sind, welches einschliesst die Kupplung einer Diazonium- oder Tetrazoniumverbindung der Formel

$$A \text{—}(N{=}N^{\oplus}\ \ X^{\ominus})_{n1} \qquad V$$

worin A die oben angegebene Bedeutung hat, $n_1$ = 1 oder 2 und $X^{\ominus}$ ein Anion ist, mit einer Aminonaphthalinsulfonsäure der Formel

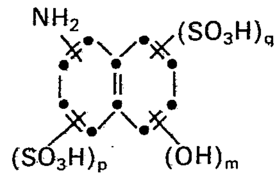

VI

worin m, p und q die oben angegebenen Bedeutungen haben, bei einem pH-Wert in dem Bereich unterhalb 5.0, und in Gegenwart einer Dicarbonsäure deren erste Dissociationskonstante den Wert $30 \times 10^{-5}$ übersteigt, oder einem Salz einer solchen Säure; und gegebenenfalls weitere Kupplung des so erhaltenen Produktes mit einer Diazoverbindung der Formel V und gegebenenfalls weitere Kupplung mit einer Verbindung der Formel VI oder einer bei Farbstoffsynthesen gewöhnlich verwendeten phenolischen oder aminogruppenhaltigen Kupplungsendkomponente.

2. Ein Verfahren gemäss Anspruch 1, worin A ein Phenyl- oder Diphenylrest ist, der gegebenenfalls substituiert ist durch eine oder mehr Alkyl- oder Alkoxygruppen mit 1 bis 4 Kohlenstoffatomen, Halogenatome, Sulfonsäuregruppen, Nitrogruppen, Hydroxygruppen, Arylgruppen, Cycloalkylgruppen, Aralkylgruppen, Aryloxygruppen, Cyanogruppen, Carbonsäuregruppen, substituierte Aminogruppen, Carbonester- oder -amidgruppen, oder Arylaminogruppen.

3. Ein Verfahren gemäss Anspruch 2, worin der Rest A abgeleitet ist von Sulfanilsäure, p-Nitranilin, 2,5-Dichloranilin oder o-Tolidin.

4. Ein Verfahren gemäss einem der vorhergehenden Ansprüche, worin die Verbindung der Formel VI ist:
1-Amino-8-naphthol-6-sulfonsäure,
1-Amino-8-naphthol-3,6-disulfonsäure (H-Säure),
2-Amino-8-naphthol-3,6-disulfonsäure (2R-Säure),
2-Amino-8-naphthol-6-sulfonsäure (γ-Säure),
1-Amino-8-naphthol-2,4-disulfonsäure (2S-Säure),
2-Amino-5-naphthol-7-sulfonsäure (Iso-γ-Säure),
1-Amino-5-naphthol-7-sulfonsäure (M-Säure),
1-Amino-8-naphthol-4-sulfonsäure (S-Säure),
1-Amino-8-naphthol-4,6-disulfonsäure (K-Säure).

5. Ein Verfahren gemäss einem der Ansprüche 1 bis 3, worin die Verbindung der Formel VI ist:
2-Naphthylamin-6,8-disulfonsäure (Amino-G-Säure),

2-Naphthylamin-3,6-disulfonsäure (Amino-R-Säure),
2-Naphthylamin-8-sulfonsäure (Badische Säure),
2-Naphthylamin-6-sulfonsäure (Brönner-Säure),
1-Naphthylamin-5,6- oder -7-sulfonsäure (Cleve-Säure),
2-Naphthylamin-5-sulfonsäure (Dahlsche Säure),
1-Naphthylamin-4,6-disulfonsäure (Dahlsche Säure II),
1-Naphthylamin-4,7-disulfonsäure (Dahlsche Säure III),
1-Naphthylamin-3,6-disulfonsäure (Freundsche Säure),
1-Naphthylamin-3,6,8-trisulfonsäure (Kochsche Säure),
1-Naphthylamin-5-sulfonsäure (Laurent-Säure),
1-Naphthylamin-4-sulfonsäure (Naphthionsäure),
1-Naphthylamin-8-sulfonsäure (Peri-Säure).

6. Ein Verfahren gemäss einem der vorhergehenden Ansprüche, worin die Dicarbonsäure oder das Salz Oxalsäure, Malonsäure, Maleinsäure, Fumarsäure oder Phthalsäure oder Salze von diesen sind.

**Revendications**

1. Procédé pour la préparation d'un composé ayant la formule:

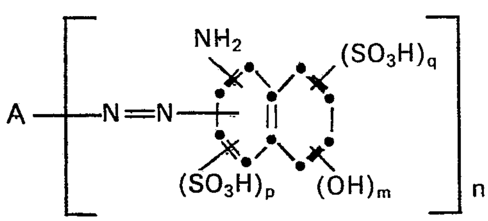

IV

dans laquelle A est un reste aromatique; m est 0 ou 1; p est 0, 1 ou 2; q est 0, 1 ou 2; à condition que p + q soit au moins égale à 1, et n est 1, 2 ou 3, et dans laquelle le ou les groupe(s) A–N=N– sont situés principalement sur les positions ortho- et/ou para par rapport au groupe amino dans le reste naphtalène, qui consiste à copuler un composé diazonium ou tétrazonium ayant la formule:

$$A\text{—}(N{=}N^{\oplus}\ X^{\ominus})_{n1} \qquad V$$

dans laquelle A a la signification précédente; $n_1$ est 1 ou 2, et $X^{\ominus}$ est un anion, avec un acide aminonaphthalènesulfonique ayant la formule:

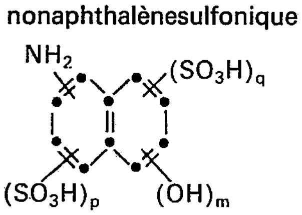

VI

dans laquelle m, p et q ont les significations précédentes, à une valeur de pH se trouvant dans le domaine inférieur à 5,0, et en présence d'un acide dicarboxylique ayant une première constante de dissociation qui dépasse $30 \times 10^{-5}$, ou bien un sel de cet acide; et éventuellement à copuler ensuite le produit ainsi obtenu avec un composé diazo de formule V, et éventuellement à copuler ensuite avec un composé de formule VI, ou un copulant final phénolique ou amino habituellement utilisé dans la synthèse des colorants.

2. Procédé selon la revendication 1, dans lequel A est un reste phényle ou diphényle, chacun éventuellement substitué par un ou plusieurs groupes alkyle ou alcoxy ayant chacun 1 à 4 atomes de carbone, des atomes d'halogène, des groupes acide sulfonique, des groupes nitro, des groupes hydroxyle, des groupes aryle, des groupe cyclo-alkyle, des groupes aralkyle, des groupes aryloxy, des groupes cyano, des groupes acide carboxylique, des groupes amino substitué, des groupes ester ou amide carboxylique, ou des groupes arylamino.

3. Procédé selon la revendication 2, dans lequel le reste A provient de l'acide sulfanilique, de la p-nitro-aniline, de la 2,5-dichloro-aniline ou de l'o-tolidine.

4. Procédé selon l'une quelconque des revendications précédentes, dans lequel le composé de formule VI est le:
acide 1-amino-8-naphthol-6-sulfonique
acide 1-amino-8-naphthol-3,6-disulfonique (acide H)
acide 2-amino-8-naphthol-3,6-disulfonique (acide 2R)
acide 2-amino-8-naphthol-6-sulfonique (acide Gamma)
acide 1-amino-8-naphthol-2,4-disulfonique (acide 2S)
acide 2-amino-5-naphthol-7-sulfonique (acide Isogamma)
acide 1-amino-5-naphthol-7-sulfonique (acide M)
acide 1-amino-8-naphthol-4-sulfonique (acide S)
acide 1-amino-8-naphthol-4,6-disulfonique (acide K).

5. Procédé selon l'un quelconque des revendications 1 à 3, dans lequel le composé de formule VI est le:
acide 2-naphtylamine-6,8-disulfonique (acide Amino G)
acide 2-naphtylamine-3,6-disulfonique (acide Amino R)
acide 2-naphtylamine-8-sulfonique (acide de la Badische)
acide 2-naphtylamine-6-sulfonique (acide de Bronner)
acide 1-naphtylamine-5,6- ou 7-sulfonique (acide de Cleve)
acide 2-naphtylamine-5-sulfonique (acide de Dahl)
acide 1-naphtylamine-4,6-disulfonique (acide II de Dahl)
acide 1-naphtylamine-4,7-disulfonique (acide III de Dahl)
acide 1-naphtylamine-3,6-disulfonique (acide de Freund)

acide 1-naphtylamine-3,6,8-trisulfonique (acide de Koch)
acide 1-naphthylamine-5-sulfonique (acide de Laurent)
acide 1-naphtylamine-4-sulfonique (acide Naphtionique)
acide 1-naphtylamine-8-sulfonique (acide de Peri)

6. Procédé selon l'une quelconque des revendications précédentes, dans lequel l'acide dicarboxylique ou son sel est l'acide oxalique, l'acide malonique, l'acide maléïque, l'acide fumarique ou l'acide phtalique, ou les sels de ces acides.